## Europäisches Patentamt

## European Patent Office

## Office européen des brevets

(19)

(11) Veröffentlichungsnummer: **0 164 499**
**B1**

(12) **EUROPÄISCHE PATENTSCHRIFT**

(45) Veröffentlichungstag der Patentschrift:
**15.11.89**

(51) Int. Cl.⁴: **B 60 R 1/02**

(21) Anmeldenummer: **85102361.4**

(22) Anmeldetag: **01.03.85**

(54) **Kraftfahrzeugspiegel, bei dem die Spiegelglas-Trägerplatte auf einem Kugelgelenk gelagert ist.**

(30) Priorität: **12.05.84 DE 8414511 U**

(43) Veröffentlichungstag der Anmeldung:
**18.12.85 Patentblatt 85/51**

(45) Bekanntmachung des Hinweises auf die Patenterteilung:
**15.11.89 Patentblatt 89/46**

(84) Benannte Vertragsstaaten:
**AT BE CH DE FR GB IT LI LU NL SE**

(56) Entgegenhaltungen:
**DE-A-3 212 356**
**DE-U-1 946 616**
**DE-U-7 110 709**
**GB-A-2 054 496**
**GB-A-2 094 394**

(73) Patentinhaber: **HOHE KG, Hauptstrasse 36, D-6981 Collenberg (DE)**

(72) Erfinder: **Polzer, Herwig, Philip- Larens- Strasse 36, D-6982 Freudenberg (DE)**
Erfinder: **Seitz, Werner, Pfarrer- Nicolai- Strasse 2, D-6981 Collenberg (DE)**

(74) Vertreter: **Zinngrebe, Horst, Dr.rer.nat., Saalbaustrasse 11, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 164 499 B1

## Beschreibung

Die Erfindung betrifft einen Kraftfahrzeugspiegel mit einem Spiegelgehäuse und einer Spiegelglas-Trägerplatte welche über ein Kugelgelenk in dem Spiegelgehäuse gelagert ist, der z. B. aus der Dokumenten GB-A-2 054 496 und GBA-2 094 394 bekannt ist.

Das Kugelgelenk wird durch Einspritzen eines in der Hitze plastischen Kunststoffes in eine zweiteilige Form hergestellt. Der Käfig entsteht dabei durch Umspritzen einer entsprechenden Kugel des Formwerkzeuges, von der der fertige Käfig in noch warmem Zustand abgezogen werden muß. Durch dieses Abziehen werden jedoch die die Kugel hintergreifenden Teile des Käfigs soweit gedehnt daß der feste Sitz der Kugel des Kugelgelenkes in dem Käfig nicht mehr gewährleistet ist. Dabei ist der Festigkeit, mit der die Kugel in dem Käfig sitzt, enge Toleranzen gesetzt, weil die Kugel zwar drehbar, jedoch in solchem Reibschluß im Käfig gehalten werden muß, daß sie sich selbst bei Erschütterungen nicht von selbst verstellt. Wird das Kugelgelenk tiefen Temperaturen ausgesetzt, führt die dann zunehmende Sprödigkeit des Käfig-Werkstoffes zu Brüchen, wenn der Käfig beim Abziehen von der Form-Kugel überdehnt worden ist.

Mit der Erfindung soll daher ein Kraftfahrzeugspiegel der eingangs genannten Art geschaffen werden, bei dem das Kugelgelenk von herstellungsbedingten Fehlern oder Brüchen weitgehend befreit ist.

Dies wird an dem eingangs genannten Kraftfahrzeugspiegel dadurch erreicht daß das Kugelgelenk aus einer Pfanne und einer in der Pfanne drehbar eingefangenen Kugelschale besteht, und daß die Pfanne aus mehreren ersten, gleichartigen, in Umfangsrichtung gleich beabstandeten Lagersegmenten und mehreren zweiten, gleichartigen Lagersegmenten besteht, wobei jedes zweite Lagersegment zwischen benachbarten ersten Lagersegmenten ausgeformt ist und die zweiten Lagersegmente bezüglich eines Durchmessers der Kugelschale den ersten Lagersegmenten gegenüberliegend ausgebildet sind. Diese Ausbildung der Lagersegmente ermöglicht das Herstellen der Pfanne mit Formen, die im Bereich der Kugel eine Hinterschnitte aufweisen, sodaß die beiden Formhälften nach fertigem Einspritzen des Kunststoffes und ausreichendem Erkalten desselben von den Kugelsegmenten leicht abgenommen werden können. Die Pfanne wird also bei der Entnahme aus der Form nicht mehr gedehnt, sodaß keine verborgenen Risse oder Überdehnungen in dem Werkstoff auftreten können.

Die Festigkeit des Sitzes der Kugelschale in der Pfanne wird verbessert, wenn die Kugelschale geschlitzt und auf Vorspannung gehalten ist. Dabei kann die Vorspannung durch eine in die Kugelschale eingelegte Feder aus einem gummiartigen Werkstoff oder aus einem Stahlring oder auch dadurch erzeugt werden, daß in die Kugelschale ein Konus mit Schraube eingesetzt oder ein Konus mit unterer Rampe eingefügt wird, gegen die eine Klemmschraube wirkt die dann zweckmäßig durch eine Öffnung im Spiegelgehäuse von außen zugänglich sein kann.

Die Verstellmöglichkeiten der Spiegelglas-Trägerplatte werden in Weiterbildung der Erfindung dadurch gesteuert, daß die Kugelschale aus einer Platte vorsteht, welche an zwei gegenüberliegenden Seiten der Kugelschale je eine Gabel trägt, welche je einen mit der Trägerplatte fest verbundenen, erhabenen Steg umfaßt, wobei die Fluchtlinie der beiden Stege parallel zum Durchmesser der Kugelschale verläuft.

Die Erfindung wird nachstehend anhand der in der beigefügten Zeichnung dargestellten Ausführungsbeispiele im einzelnen beschrieben. Es zeigen:

Fig. 1    einen Schnitt längs der Linie A - A aus Figur 2 durch ein Kugelgelenk;

Fig. 2    das Kugelgelenk nach Fig. 1 in Draufsicht;

Fig. 3    einen Schnitt durch eine andere Ausführungsform einens Kugelgelenkes längs der Linie B - B aus Fig. 4;

Fig. 4    eine Draufsicht auf das Kugelgelenk gemäß Fig. 3;

Fig. 5    einen Schnitt durch eine weitere Ausführungsform eines Kugelgelenkes längs der Linie C-C aus Fig. 6;

Fig. 6    eine Draufsicht auf das Kugelgelenk gemäß Fig. 5;

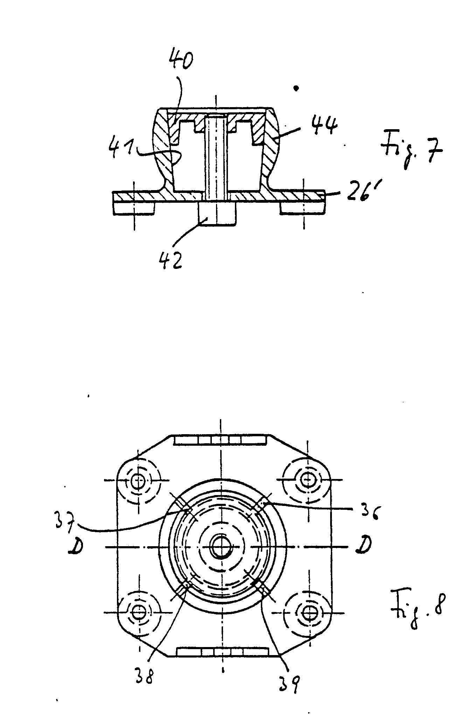

Fig. 7    einen Axialschnitt durch eine Kugelschale gemäß einer weiteren Ausführungsform;

Fig. 8    eine Draufsicht auf die Kugelschale mit Platte gemäß Fig. 7;

Fig. 9    einen Schnitt durch Teile eines Kraftfahrzeugspiegels mit einem Kugelgelenk gemäß einer weiteren Ausführungsform der Erfindung längs der Linie E - E aus Fig. 10;

Fig. 10    eine Draufsicht auf den Spiegel gemäß Fig. 9.

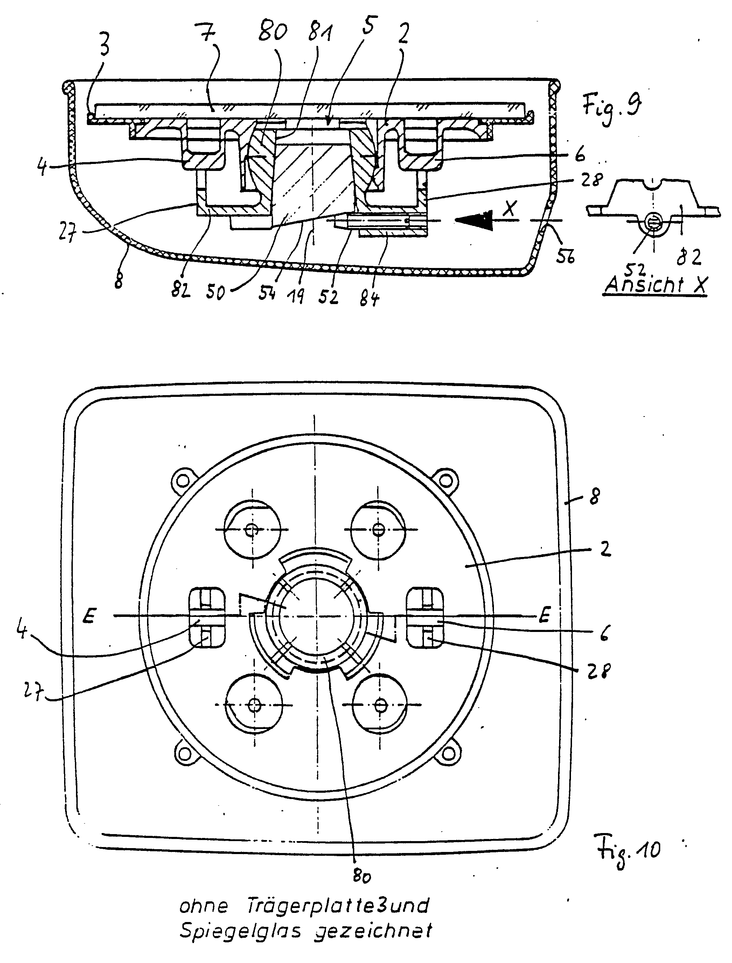

Gemäß Figuren 9 und 10 weist der Kraftfahrzeug Außenspiegel ein schalenförmiges Kunststoffgehäuse 8 auf, in dem in nicht dargestellter Weise eine motorisch oder von Hand verstellbare Spiegelglasscheibe 7 gehalten ist. Die Spiegelglasscheibe 7 wird von einem Kunststoff ring 3 am Rand unterfaßt, der auf einer Spiegelglas-Trägerplatte 2 befestigt ist. Die Spiegelglas-Trägerplatte 2 ist über einem in ganzen mit 5 bezeichnetes Kugelgelenk in nicht dargestellter Weise mit dem Boden des Spiegelgehäuses 8 verbunden.

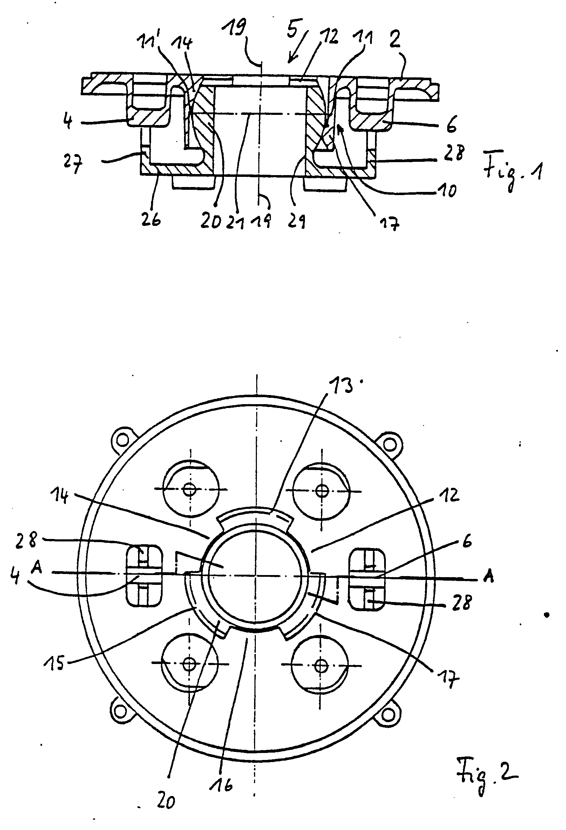

Das Kugelgelenk 5 besteht in seiner in den Figuren 1 und 2 dargestellten Grund-Ausführung aus zwei Bauteilen, nämlich der Spiegelglas-Trägerplatte 2 und einer Kugelplatte 26. Aus der Kugelplatte 26 ist mittig eine Kugelschale 20 erhaben ausgeformt, die in diesem Ausführungsbeispiel eine zylindrische, die Kugelplatte 26 durchsetzende Mittelbohrung 29 aufweist. An den beiden bezüglich der Kugelschale 20 gegenüberliegenden Seiten der Kugelplatte 26 steht parallel zur Achse 19 der Kugelschale 20 je eine Gabel 27, 28 vor, von denen jede je einen Steg 4, 6 der Trägerplatte 2 umfaßt. Die Stege 4, 6 verlaufen mit Abstand zur Oberseite der Trägerplatte 2 parallel zu dem Durchmesser 21 der Kugelschale, der senkrecht zur Achse 19 steht.

Die Trägerplatte 2 besitzt zwischen den beiden Stegen 4, 6 in der Mitte eine herabhängende Pfanne 10 mit zylindrischer Außenkontur, in welcher die Kugelschale 20 mit ihrer Außenperipherie drehbar eingefangen ist. Aus der Innenwand der Pfanne 10 sind mehrere nach innen vorstehende Lagersegmente ausgebildet, und zwar je zur Hälfte beiderseits des Durchmessers 21 der Kugelschale 20.

Drei erste Lagersegmente 12, 14, 16 sind über den Umfang der Pfanne 10 gleich beabstandet in einem gegenseitigen Abstand von je 120 Grad angeordnet und bestehen jeweils aus einer der Außenkontur der Kugelschale 20 angepaßten nach oben einwärts verlaufenden Kugelfläche, welche an dem der Oberseite der Trägerplatte 2 nahe dem Ende nach außen abgesetzt ist. Es kann aber auch eine andere Anzahl der Lagersegmente angeordnet werden.

Ferner sind zweite Lagersegmente 13, 15, 17 unterhalb des Durchmessers 21 aus der Innenwand der Pfanne 10 nach innen vorstehend ausgebildet. Dabei erstreckt sich je ein zweites Lagersegment 13 bzw. 15 bzw. 17 umfangsmäßig zwischen je zwei benachbarten ersten Lagersegmenten 12, 14 bzw. 14, 16 bzw. 16, 12. Die zweiten lagersegmente weisen je eine der Außenkontur der Kugelschale 20 angepaßte Kugelfläche auf, welche zum unteren Rand der Pfanne 10 nach außen abgesetzt ist und nach oben über eine radial auswärts weisende Stufe 11 in einen rein zylindrischen Innenwandabschnitt der Pfanne übergeht. Entsprechend ist die Kugelfläche jedes ersten Lagersegmentes 12, 14, 16 an ihrem jeweiligen unteren Rand ebenfalls mit einer radial auswärts weisenden Stufe 11 zu einem sich weiter nach unten erstreckenden rein zylindrischen Innenwandabschnitt der Pfanne 10 abgesetzt.

Man erkennt, daß bei der Herstellung der ersten und zweiten Lagerelemente zwei Formkerne benötigt werden, die keinerlei Hinterschnitte aufweisen. Kann Trägerplatte 2 ohne weiteres den beiden zusammengefügten Formhälften nach deren Öffnung entformt werden.

Im dargestellten Ausführungsbeispiel gemäß Figuren 1 und 2 schließen in Umfangsrichtung jeweils ein erstes Lagersegment an ein zweites Lagersegment und dieses wiederum an ein erstes Lagersegment, und so fort an. Es können jedoch auch zwischen den ersten und zweiten Lagersegmenten jeweils axial durchgehende rein zylindrische Innenwandabschnitte der Pfanne 10 vorgesehen sein, wobei dann die Lagerfläche der Kugelschale 20 insgesamt kleiner wird.

Obgleich die Kugelschale 20 mit ihrer Axialbohrung 29 so ausgelegt werden kann, daß sie hinreichende radiale Elastizität über eine lange Lebensdauer des Kugelgelenkes 5 behält, kann es sich als zweckmäßig erweisen, der Kugelschale 20 eine nach radial außen weisende Vorspannung auf zuprägen. Hierzu sind in den weiteren Figuren verschiedene Möglichkeiten dargestellt.

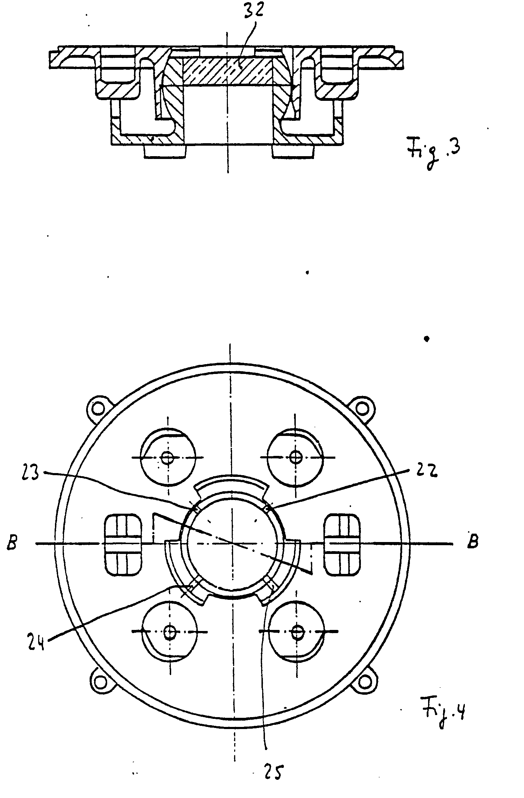

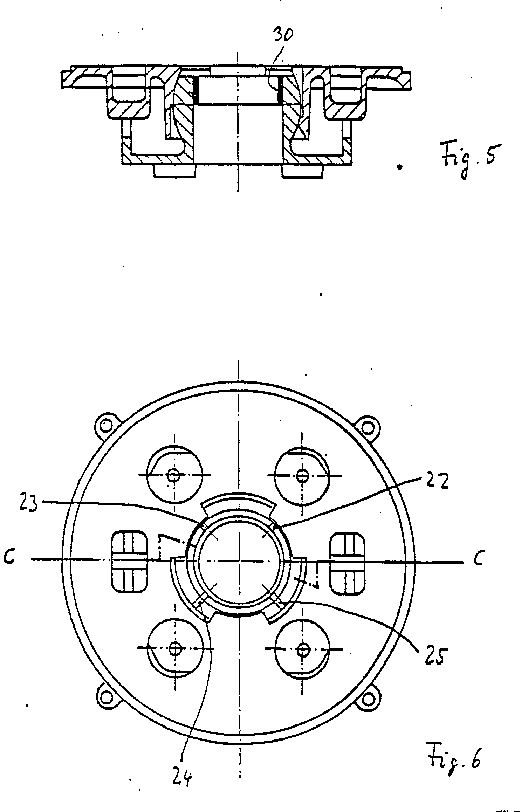

Bei der Ausführungsform gemäß Figuren 3 und 4 ist in den von der Kugelplatte 26 entferntem Teil der Bohrung 29 der Kugelschale 20 eine Gummifeder 32 eingesetzt, welche ein Nachgeben der Kugelschale 20 nach radial innen etwa aufgrund einer Ermüdung des Werkstoffes entgegenwirkt. Damit die Kugelschale 20 der durch die Gummifeder 32 ausgeübten Vorspannung folgen kann, ist die Kugelschale 20 an mehreren Stellen ihres Umfanges vom freien Ende aus mit axial gerichteten Schlitzen 22, 23, 24, 25 versehen. Statt der Gummifeder kann in das freie Ende der Bohrung 29 auch ein Federstahlring 30 eingespannt werden, der die zur Erzeugung der Vorspannung erforderliche radial gerichtete Kraft ausübt auf Figuren 5, 6.

Andererseits ist es auch möglich, die Vorspannung durch einen Konus 40 zu erzeugen, der vom freien Ende her in die konische Blindbohrung 41 der Kugelschale 44 mittels einer Schraube 42, die sich an der Platte 26' abstützt, eingezogen werden kann. Auch diese Kugelschale 44 ist an ihrem Umfang mit mehreren axial sich erstreckenden Schlitzen 36, 37, 38, 39 versehen. Mit diesem Konus 40 ergibt sich die Möglichkeit, eine Ermüdung des Kugelschalen-Werkstoffes durch Anziehen der Schraube 42 entgegenzuwirken.

Bei der in den Figuren 9 und 10 schließlich dargestellten Ausführungsform des Kugelgelenkes 5 ist der Konus 50 vom Äußeren des Spiegelgehäuses 8 her verstellbar. Dazu besitzt die Kugelschale 80 eine konische axiale Bohrung 81, die sich im Unterschied zur Bohrung 41 zum freien Ende der Kugelschale 80 hin verjüngt. In die Bohrung 81 ist ein Konus 50 eingesetzt, der an seiner Unterseite eine zur Achse 19 geneigte Rampe 54 aufweist. Die Kugelplatte 82 besitzt an der der Kugelschale 80 benachbarten Seite der Rampe 54 einen Ansatz 84 mit einer Durchgangsbohrung mit Innengewinde, in die eine Klemmschraube 52 mit konischem Ende eingedreht ist. Mit der Bohrung im Ansatz 84 fluchtend weist das Spiegelgehäuse 8 eine Öffnung 56 auf, sodaß durch die diese die Klemmschraube 52 von außen etwa mittels eines Schraubendrehers zugänglich ist. Durch Einwärtsdrehen der Klemmschraube 52 wird der Konus 50 tiefer in die Bohrung 81 mit der Folge gedrängt, daß die Kugelschale 80 radial nach außen gedrückt wird. Auf diese Weise ist es möglich, ein vorgewähltes Drehmoment Spiegelglases innerhalb des Spiegelgehäuses 8 durch Nachziehen der Klemmschraube 52 zu erhöhen.

Es versteht sich, daß auch bei den vorstehend erläuterten Ausführungsbeispielen die Kugelplatte 26 fest auf dem Boden des Spiegelgehäuses 8 aufgeschraubt oder aufgenietet ist.

Es liegt im Rahmen der Erfindung, mehrere, beispielsweise vier Lagersegmente über den Umfang der Pfanne gleich beabstandet, beispielsweise in ein Winkelabstand von 90 Grad, anzuordnen.

**Patentansprüche**

1. Kraftfahrzeugspiegel mit einem Spiegelgehäuse (8) und einer Spiegelglas-Trägerplatte (2), welche über ein Kugelgelenk (5) in dem Spiegelgehäuse (8) gelagert ist, dadurch gekennzeichnet, daß das Kugelgelenk (5) aus einer Pfanne (10) und einer in der Pfanne drehbar eingefangen Kugelschale (20) besteht, und daß die Pfanne aus mehrer ersten, gleichartigen, in Umfangrichtung gleich beabstanden Lagersegmenten (12, 14, 16) und mehren zweiten, gleichartigen Lagersegmenten (13, 15, 17) besteht, wobei jedes zweite Lagersegment zwischen benachbarten ersten Lagersegmenten ausgeformt ist und die zweiten Lagersegmente bezüglich eines Durchmessers (21) der Kugelschale (20) den ersten Lagersegmenten gegenüberliegend ausgebildet sind.

2. Spiegel, nach Anspruch 1, dadurch gekennzeichnet, daß die Kugelschale geschlitzt und auf Vorspannung gehalten ist.

3. Spiegel nach Anspruch 2, dadurch gekennzeichnet, daß die Kugelschale durch eine Feder (30, 32) auf Vorspannung gehalten ist.

4. Spiegel nach Anspruch 3, dadurch gekennzeichnet, daß die Feder aus einem gummiartigen Werkstoff (32) besteht.

5. Spiegel nach Anspruch 3, dadurch gekennzeichnet, daß die Feder aus einem Stahlring (30).

6. Spiegel nach Anspruch 2, dadurch gekennzeichnet, daß die Kugelschale über einem Konus (40) mit Schraube (42) auf Vorspannung gehalten ist.

7. Spiegel nach Anspruch 2, dadurch gekennzeichnet, daß in die Kugelschale eine Konus (50) mit unterer Rampe (54) eingesetzt ist, gegen die eine Klemmschraube (52) wirkt.

8. Spiegel nach Anspruch 7, dadurch gekennzeichnet, daß die Klemmschraube durch eine Öffnung (56) im Spiegelgehäuse (8) von außen zugänglich ist.

9. Spiegel nach einem der vorstehenden Ansprüche dadurch gekennzeichnet, daß die Kugelschale aus einer Platte (26) vorsteht, welche an zwei gegenüberliegenden Seiten der Kugelschale je eine Gabel (27, 28) trägt, welche je einen mit der Trägerplatte (2) fest verbundenen, erhabenen Steg (4, 6) umfaßt, wobei die Fluchtlinie der beiden Stege parallel zum Durchmesser (21) verläuft.

**Claims**

1. A for vehicle mirror comprising a mirror housing (8) and a mirror glass carrier plate (2) which is mounted in the for housing (8) by way of a ball joint (5) characterised in that the ball joint (5) comprises a socket (10) and a ball shell (20) which is rotatably engaged in the socket and that the socket comprises a plurality of first similar equally circumferentially spaced mounting segments (12, 14, 16) and a plurality of second similar mounting segments (13, 15, 17), wherein each second mounting segment is formed between adjacent first mounting segments and the second mounting segments are formed in opposite relationship to the first mounting segments with respect to a diameter (21) of the ball shell (20).

2. A mirror according to claim 1 characterised in that the ball shell is slit and held in a prestressed condition.

3. A mirror according to claim 2 characterised in that the ball shell is held in a prestressed condition by a spring (30, 32).

4. A mirror according to claim 3 characterised in that the spring comprises a rubber-like material (32).

5. A mirror according to claim 3 characterised in that the spring comprises a steel ring (30).

6. A mirror according to claim 2 characterised in that the ball shell is held in a prestressed condition by way of a cone (40) with a screw (42).

7. A mirror according to claim 2 characterised in that fitted into the ball shell is a cone (50) with a lower ramp (54) against which a clamping screw (52) acts.

8. A mirror according to claim 7 characterised in that the clamping screw is accessible from the outside through an opening (56) in the for housing (8).

9. A mirror according to one of the preceding claim characterised in that the ball shell projects from a plate (26) which at each of two oppositely disposed sides of the ball shell carries a respective fork (27, 28) which embraces a respective raised limb portion (4, 6) which is fixedly connected to the carrier plate (2), wherein the straight line connecting the two limb portions extends parallel to the diameter (21).

**Revendications**

1. Rétroviseur de véhicule automobile avec un boîtier de rétroviseur (8) et une plaque de support de verre de rétroviseur (2) qui est logée dans le boîtier de rétroviseur (8) par l'intermédiaire d'une articulation à rotule (5), caractérisé en ce que l'articulation à rotule (5) est constituée d'un coussinet (10) et d'une cuvette à rotule (20) montée en rotation dans le coussinet, et en ce que le coussinet est constitué de plusieurs premiers segments d'appui de même nature équidistants dans le sens circonférentiel (12, 14, 16) et de plusieurs seconds segments d'appui de même nature (13, 15, 17), chaque second segment d'appui étant moulé entre des premiers segments d'appui voisins et les seconds segments d'appui étant réalisés en face des premiers segments d'appui par rapport à un diamètre (21) de la cuvette à rotule (20).

2. Rétroviseur conforme à la revendication 1, caractérisé en ce que la cuvette à rotule est fendue et maintenue en précontrainte.

3. Rétroviseur conforme à la revendication 2, caractérisé en ce que la cuvette à rotule est maintenue en précontrainte par un ressort (30, 32).

4. Rétroviseur conforme à la revendication 3, caractérisé en ce que le ressort est en matériau du type caoutchouc (32).

5. Rétroviseur conforme à la revendication 3, caractérisé en ce que le ressort est réalisé dans un anneau en acier (30).

6. Rétroviseur conforme à la revendication 2, caractérisé en ce que la cuvette à rotule est maintenue en précontrainte par l'intermédiaire d'un cône (40) avec une vis (42).

7. Rétroviseur conforme à la revendication 2, caractérisé en ce que dans la cuvette à rotule est inséré un cône (50) avec une rampe inférieure (54) contre laquelle agit une vis de serrage (52).

8. Rétroviseur conforme à la revendication 7, caractérisé en ce que la vis de serrage est accessible de l'extérieur par une ouverture (56) dans le boîtier de rétroviseur (8).

9. Rétroviseur conforme à l'une des revendications précédentes, caractérisé en ce que la cuvette à rotule fait saillie sur une plaque (26) qui supporte, sur chacun de deux côtés opposés de la cuvette à rotule, une fourchette (27, 28) qui entoure chacune une nervure en relief (4, 6) solidarisée à la plaque de support (2), l'axe d'alignement des deux nervures étant parallèle au diamètre (21).

Fig. 1

Fig. 2

Fig.3

Fig.4

Fig. 5

Fig. 6

40

41

44

Fig. 7

26'

42

37

36

D          D

38          39

Fig. 8

Fig. 9

Ansicht X

Fig. 10

ohne Trägerplatte 3 und
Spiegelglas gezeichnet